# EUROPÄISCHE PATENTSCHRIFT

(11) **EP 1 107 172 B1**
(45) Veröffentlichungstag und Bekanntmachung des Hinweises auf die Patenterteilung: **04.04.2007**
(21) Anmeldenummer: 00122657.0
(22) Anmeldetag: 18.10.2000
(51) Int. Cl.: G06K 13/08, G06K 7/00

(54) **Kartenlesevorrichtung mit beleuchtetem Einsteckschlitz**
Card reader with illuminated insertion slit
Lecteur de cartes à puce avec une fente d'insert éclairée

(30) Priorität: 10.12.1999 DE 19959463
(43) Veröffentlichungstag der Anmeldung: 13.06.2001
(73) Patentinhaber: National Rejectors, Inc. GmbH, 21614 Buxtehude (DE)
(72) Erfinder: Glück, Anton, 21698 Harsefeld (DE)
(74) Vertreter: Hauck Patent- und Rechtsanwälte

(56) Entgegenhaltungen:
- EP-A- 0 902 386
- DE-A- 3 528 558
- FR-A- 2 661 528

## Beschreibung

Die Erfindung bezieht sich auf eine Kartenlesevorrichtung nach dem Oberbegriff des Patentanspruchs 1.

Aus DE 197 38 412 ist eine Kartenlesevorrichtung bekannt geworden, bei der die Vorrichtung aus zwei getrennten Einheiten besteht, nämlich zum einen aus einer Schlitzeinheit, die an einer Wand oder einer Tür eines Automaten befestigbar ist und die einen Einsteckschlitz aufweist. Zum anderen aus einer Leseeinheit mit einer Kontaktiereinheit, die auf der anderen Seite der Wand angeordnet und mit einer Schlitzeinheit über eine lösbare Steckverbindung verbindbar ist. Die Leseeinheit enthält ein Steuermodul, beispielsweise in Form einer Leiterplatte für die Durchführung aller Funktionen beim Lesevorgang einer Karte einschließlich evtl. Verriegelung der Karte in der Kontaktiereinheit. Aus der bekannten Vorrichtung ist auch bekannt, den Einsteckschlitz mit einer Schutzklappe zu versehen, die normalerweise geschlossen und beispielsweise durch Schwerkraft oder eine Feder in Schließstellung vorgespannt ist. Die Schutzklappe dient dazu, ungewolltes Eindringen von Verunreinigungen oder dergleichen zu verhindern. Außerdem soll die Schutzklappe so ausgeführt sein, daß nur eine Karte in den Einsteckschlitz eingeführt werden kann, während andere schmalere Gegenstände, z. B. auch Münzen, nicht eingeschoben werden können.

Der Erfindung liegt die Aufgabe zugrunde, eine Kartenlesevorrichtung zu schaffen, bei der die Betätigung auch bei Dunkelheit problemlos möglich ist.

Diese Aufgabe wird durch die Merkmale des Patentanspruchs 1 gelöst.

Bei der erfindungsgemäßen Kartenlesevorrichtung ist in der Schlitzeinheit, d. h. im Gehäuse für die Schlitzeinheit, eine Leiterplatte angeordnet, die über eine Steckverbindung mit dem Steuermodul verbindbar ist. Auf der Leiterplatte ist mindestens eine Lichtquelle angeordnet, beispielsweise eine lichtemittierende Diode (LED). Aus der bereits genannten Druckschrift ist bekannt, die Schlitzeinheit über LED's zu beleuchten, die auf der Leiterplatte der Leseeinheit angeordnet sind. Bei der erfindungsgemäßen Vorrichtung ist jedoch die LED auf der zur Schlitzeinheit gehörenden Leiterplatte angeordnet, was eine bessere Beleuchtung an einem gewünschten Ort ermöglicht. Bei der erfindungsgemäßen Vorrichtung ist die Schutzklappe aus einem transparenten Material geformt. Sie enthält einen prismatischen Abschnitt, der zur Lichtquelle ausgerichtet ist mit einer Ein- und einer Austrittsfläche für den Lichtstrahl zur Beleuchtung der Klappe dergestalt, daß aus der Klappe austretendes Licht auch durch den Einsteckschlitz tritt. Die erfindungsgemäße Klappe wird vorzugsweise ständig beleuchtet, so daß ein potentieller Benutzer eines Automaten sofort den Einsteckschlitz findet, ohne daß eine sonstige Beleuchtung am Automaten oder in der Umgebung erforderlich ist.

Häufig ist erwünscht, daß die Klappe auch dazu dient, das Einführen von anderen Gegenständen zu verhindern. Hierzu sieht eine Ausgestaltung der Erfindung vor, daß die Klappe einen sich parallel zur Schwenkachse erstrekkenden Querschlitz aufweist, dessen Länge etwas geringer ist als die Breite einer Karte, wobei der Querschlitz so ausgelegt ist, daß ein in den Einsteckschlitz eingeführter Gegenstand, der eine geringere Breitenausdehnung als die Karte aufweist, beim anfänglichen Verschwenken der Klappe im Querschlitz eingeklemmt wird. Der Querschlitz oder die Querausnehmung hat eine etwas größere Höhe als die Höhe des Einsteckschlitzes in der Schlitzeinheit. Ein in der Höhe etwas niedrigerer Gegenstand, der jedoch eine geringere Breite als eine Karte hat, wird daher von dem Querschlitz aufgenommen, so daß die Schutzklappe zunächst etwas verschwenkt. Ab einem bestimmten Schwenkwinkel wird jedoch die Klappe an einem weiteren Verschwenken gehindert, so daß es nicht mehr möglich ist, den Gegenstand weiter in den Schlitz einzuführen. Es versteht sich, daß diese Ausgestaltung der Erfindung auch bei Schutzklappen verwirklichbar ist, welche nicht aus transparentem Material bestehen. Wird hingegen eine Karte eingeführt, stößt sie gegen seitliche Klappenabschnitte auf beiden Seiten des Schlitzes, die nicht vertieft sind. Dadurch erfolgt eine normale Verschwenkung der Klappe, und die Karte kann in die Kontaktiereinheit eingeführt werden.

Eine weitere Ausgestaltung der Erfindung sieht vor, daß in einer Nut parallel zur Schwenkachse ein linienförmiges Dichtungselement aufgenommen ist, das mit der zugekehrten Seite der Karte in gleitenden Eingriff tritt, wenn die Karte in den Einsteckschlitz eingeführt wird. Das Dichtelement führt eine wischende Bewegung auf der Kartenoberfläche aus und verhindert dadurch, daß Feuchtigkeit auf der Karte an empfindliche elektronische Teile der Lesevorrichtung herangebracht wird. Vorzugsweise ist das Dichtelement ringförmig und in einer umlaufenden Nut der Klappe aufgenommen.

In einer anderen Ausgestaltung der Erfindung ist vorgesehen, daß die Klappe an ihrer Rückseite mindestens einen vorspringenden Abschnitt aufweist, der den Einbau der Klappe in die korrekte Lage bzw. das Verschwenken der Klappe verhindert, wenn die Klappe in falscher Orientierung eingesetzt ist.

Die Erfindung wird nachfolgend anhand eines in Zeichnungen dargestellten Ausführungsbeispiels näher erläutert.
- Fig. 1: zeigt perspektivisch eine Schlitzeinheit einer Kartenlesevorrichtung.
- Fig. 2: zeigt einen Querschnitt durch die Schlitzeinheit nach Fig. 1 mit einer Schutzklappe.
- Fig. 3: zeigt perspektivisch die Schutzklappe nach Fig. 2.
- Fig. 4: zeigt eine ähnliche Darstellung wie Fig. 2 beim Einführen einer Karte.
- Fig. 5: zeigt eine ähnliche Darstellung wie Fig. 2 oder 4 beim Einführen eines Gegenstandes, der schmaler als eine Karte ist.

In Fig. list eine Schlitzeinheit 10 dargestellt mit einem Gehäuse 12, in dem ein Einsteckschlitz 14 angeordnet ist und das drei Öffnungen 16 für die Aufnahme von Tastabschnitten von Tastschaltern oder dergleichen aufweist. An der Rückseite der Schlitzeinheit 10 sind zwei nach hinten weisende Ansätze vorgesehen, von denen einer bei 18 dargestellt ist mit einer seitlichen Ausnehmung 20. Die Ansätze 18 dienen zum Einstecken in Fassungsabschnitte einer nicht gezeigten Leseeinheit, die mit der Schlitzeinheit 10 über eine Steckverbindung verbindbar ist, wobei ein entsprechender Rastabschnitt in die Ausnehmung 20 eingreift. Eine derartige Verbindung ist beispielsweise in der bereits erwähnten DE 197 38 412 beschrieben.

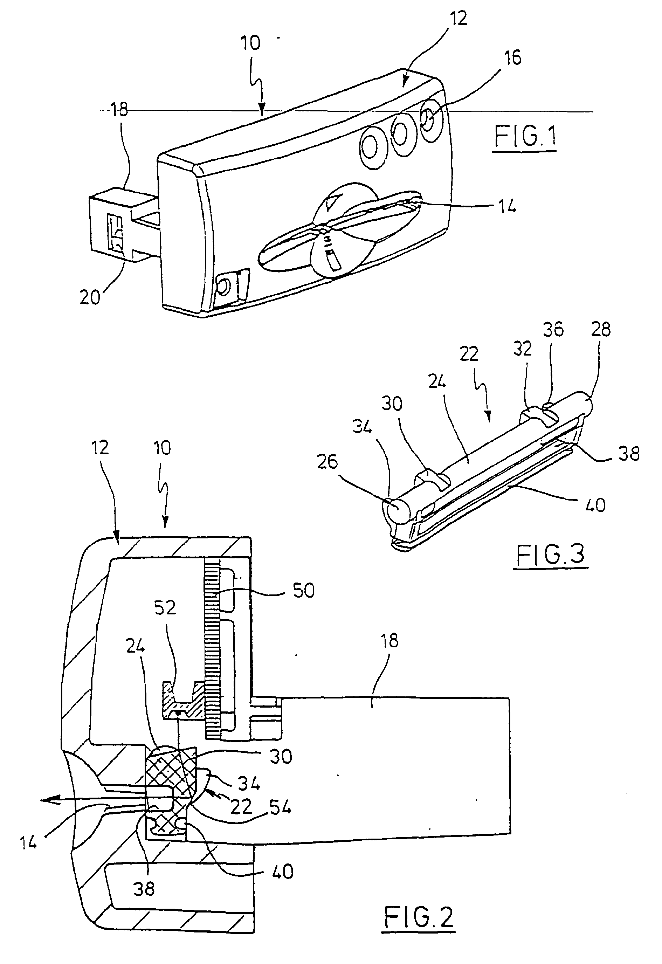

Wie aus den Fig. 2 bis 5 hervorgeht, ist im Inneren der Schlitzeinheit 10 eine Schutzklappe 22 um eine Längsachse schwenkbar gelagert. Der Aufbau der Schutzklappe ist deutlich in Fig. 3 zu ersehen.

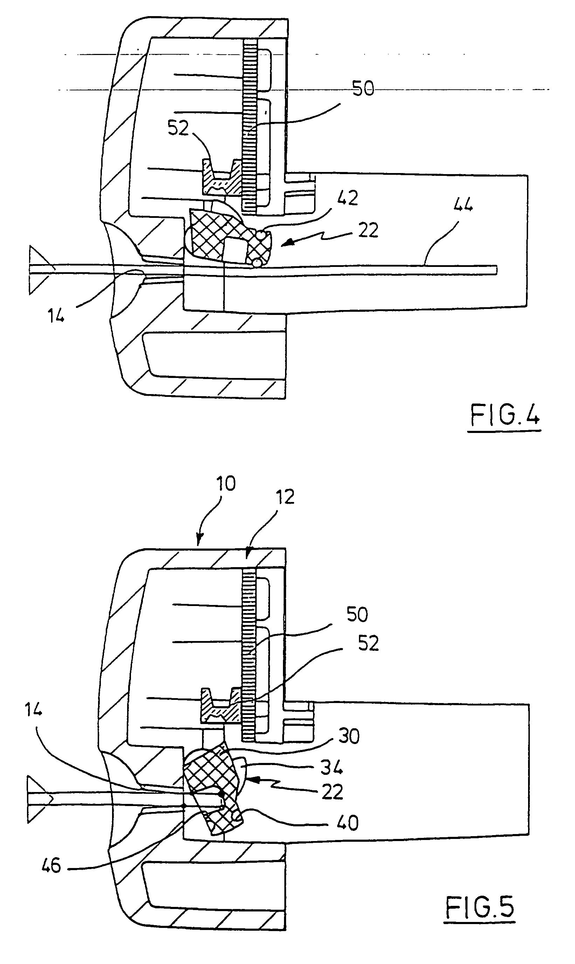

Die Schutzklappe 22 weist im oberen Bereich einen zylindrischen Abschnitt 24 auf, der an den Enden in zylindrischen Zapfen 26, 28 endet, mit deren Hilfe die Klappe 22 um eine Schwenkachse schwenkbar gelagert ist. Die Schlitzeinheit 10 kann entsprechende Lagerschlitze aufweisen (nicht gezeigt), in denen die Zapfen 26, 28 aufgenommen sind, um eine entsprechende Schwenkbewegung der Klappe zuzulassen, wie in den Fig. 4 und 5 gezeigt. Die Klappe 22 weist ferner prismatische Abschnitte 30, 32 auf, auf deren Wirkungsweise in Verbindung mit den Fig. 2 bis 5 noch eingegangen wird. An der Rückseite nahe der Enden sind ohrförmige Ansätze 34, 36 vorgesehen, deren Aufgabe ebenfalls noch erläutert wird. An der Vorderseite weist die Schutzklappe 22 unterhalb des zylindrischen Abschnitts 24 eine schlitzartige Ausnehmung 38 auf, die sich nahezu über die gesamte Länge oder Breite der Klappe 22 erstreckt. Der Schlitz 38 ist an beiden Enden abgeschlossen.

Unterhalb des Querschlitzes 38 ist eine umlaufende Nut 40 vorgesehen. Sie dient zur Aufnahme eines linienförmigen umlaufenden Dichtelements 42, wie in Fig. 4 dargestellt.

Der Querschlitz 38 hat eine Ausdehnung derart, daß er etwas geringer ist als die Breite einer Karte. Beim Einführen einer Karte in den Einsteckschlitz 14 gelangt daher die Kartenkante nicht in den Schlitz 38, sondern gegen die seitlichen Endabschnitte der Klappe 22, so daß die Klappe in die Öffnungsstellung verschwenkt werden kann, wie dies in Fig. 4 gezeigt ist. Die eingeschobene Karte ist dort mit 44 bezeichnet. Wie aus der Konstruktion ebenfalls erkennbar, gelangt die Klappe 22 nach dem Herausnehmen der Karte 44 durch Schwerkraftwirkung wieder in die Schließstellung nach Fig. 2. Die Schwenkachse, welche durch die Lagerzapfen 26, 28 definiert ist, ist exzentrisch angeordnet und erlaubt das selbsttätige Zurückschwenken.

Wird hingegen ein Gegenstand 46 gemäß Fig. 5 in den Einsteckschlitz 14 eingeführt, dessen Ausdehnung kleiner ist als die Länge des Schlitzes 38, tritt dieser vollständig in den Querschlitz 38 ein und ermöglicht nur eine relativ geringe Verschwenkung der Klappe 22, bis die hervorgerufene Klemmwirkung mit dem Einsteckschlitz 14 ein weiteres Verschwenken verhindert. Die Schutzklappe verhindert mithin das Einführen anderer Gegenstände als eine Karte.

In der Schlitzeinheit 10 ist eine Leiterplatte 50 angebracht, die über eine nicht gezeigte Steckverbindung mit der nicht gezeigten Leseeinheit elektrisch bzw. elektronisch verbindbar ist. Auf die Funktion der Leiterplatte 50 soll im einzelnen nicht eingegangen werde. Sie enthält zwei LED's, von denen einer bei 52 dargestellt ist. Die Abstrahlrichtung ist nach unten, wie in Fig. 2 zu erkennen. Die LED's 52 sind zu den prismatischen Abschnitten 30, 32 ausgerichtet. Der Lichtstrahl tritt in die zugekehrte Fläche des prismatischen Abschnitts 34, 36 ein und wird durch eine Ablenkfläche 54 des prismatischen Abschnitts 30 in Richtung Querschlitz 38 gelenkt durch den Einsteckschlitz 14 hindurch. Dies ist natürlich nur dann der Fall, wenn die Schutzklappe 22 aus einem transparenten Material besteht und die Ablenkfläche 54 Spiegelwirkung aufweist. Dadurch ist die Schutzklappe 22 bzw. der Einsteckschlitz 14 beleuchtet, so daß die Karte problemlos auch bei Dunkelheit eingeführt werden kann, wenn eine äußere ausreichende Beleuchtung nicht vorhanden ist.

Die Klappe 22 kann theoretisch auch in einer um 180° verdrehten Orientierung in die Lagerausnehmungen der Schlitzeinheit 10 eingesetzt werden. Um dies dem Einbaumonteur anzuzeigen bzw. eine Betätigung der Klappe 22 zu verhindern, sind die ohrförmigen Abschnitte 34 vorgesehen. Sie bringen die Klappe 22 bei falschem Einbau in eine Lage, die von der nach Fig. 2 abweicht und eher der nach Fig. 5 ähnelt. Daran erkennt der Monteur die falsche Einbaulage. Selbst wenn diese nicht bemerkt wird, ist jedoch eine Funktion der Klappe nicht mehr möglich, weil die ohrförmigen Abschnitte 34 ein Verschwenken verhindern. Dadurch wird ein Einstecken einer Karte blockiert.

Wie aus Fig. 4 hervorgeht, erfüllt das Dichtelement 42 eine Wischfunktion. Der zugekehrte Abschnitt des Dichtelements 42 gleitet an der zugekehrten Fläche der Karte 44 entlang, in der auch z.B. ein Chip, der von der nicht gezeigten Kontaktiereinheit gelesen wird, eingelassen ist. Auf diese Weise wird verhindert, daß Feuchtigkeit an der Karte 44 zu den empfindlichen elektronischen Bauteilen gelangt.

## Patentansprüche

1. Kartenlesevorrichtung, die eine Schlitzeinheit und ein Leseeinheit aufweist, die lösbar miteinander verbindbar sind, wobei die Leseeinheit ein elektronisches Steuermodul für die Kartenlesefunktionen und die Schlitzeinheit eine Schutzklappe aufweist, die um eine Achse verschwenkbar gelagert und in die Schließstellung vorgespannt ist, **dadurch gekennzeichnet, daß** in der Schlitzeinheit (10) eine Leiterplatte (50) angeordnet ist, die über eine Steckverbindung mit dem Steuermodul verbindbar ist und an der mindestens eine Lichtquelle (52) angeordnet ist, die Schutzklappe (22) aus transparentem Material geformt ist und mindestens einen zur Lichtquelle (52) ausgerichteten prismatischen Abschnitt (30) aufweist mit einer Ein- und einer Ausstrahlfläche zur Beleuchtung der Klappe (22) dergestalt, daß aus der Klappe (22) austretendes Licht auch durch den Einsteckschlitz (14) tritt.

2. Vorrichtung nach Anspruch 1, **dadurch gekennzeichnet, daß** die Lichtquelle eine lichtemittierende Diode (LED) ist.

3. Vorrichtung nach Anspruch 1 oder 2, **dadurch gekennzeichnet, daß** die Klappe einen sich parallel zur Schwenkachse erstreckenden Querschlitz (38) aufweist, dessen Länge etwas geringer ist als die Breite einer Karte (44), wobei der Querschlitz (38) so ausgelegt ist, daß ein in den Einsteckschlitz (14) eingesteckter Gegenstand (46), der eine geringere Breitenausdehnung als die Karte (44) aufweist, beim anfänglichen Verschwenken der Klappe (22) im Querschlitz (38) eingeklemmt wird.

4. Vorrichtung nach einem der Ansprüche 1 bis 3, **dadurch gekennzeichnet, daß** in einer Nut (40) parallel zur Schwenkachse ein linienförmiges Dichtungselement (42) aufgenommen ist, das mit der zugekehrten Seite der Karte (44) in gleitendem Eingriff tritt, wenn die Karte (44) in den Einsteckschlitz (14) eingeführt wird.

5. Vorrichtung nach Anspruch 4, **dadurch gekennzeichnet, daß** eine umlaufende Nut (40) vorgesehen ist zur Aufnahme eines ringförmigen Dichtelements (42).

6. Vorrichtung nach einem der Ansprüche 1 bis 5, **dadurch gekennzeichnet, daß** die Klappe (22) an ihrer Rückseite mindestens einen vorspringenden Abschnitt (34, 36) aufweist, der den Einbau der Klappe (22) in die korrekte Lage bzw. ein Verschwenken der Klappe (22) verhindert bzw. ein Einstecken einer Karte blockiert, wenn die Klappe (22) in einer falschen Orientierung eingesetzt wird.

## Claims

1. A card reader device having a slot unit and a reading unit which are detachably connectable with each other, wherein the reading unit has an electronic control module for the card reader functions and the slot unit has a protection flap, which is mounted swivelling around an axis and is pre-tensioned into the locking position, **characterised in that** a printed circuit board (50) is disposed in the slot unit (10) which is connectable with the control module via a plug-in connection and on which at least one light source (52) is disposed, the protection flap (22) is formed from a transparent material and has at least one prismatic portion (30) directed to the light source (52), with an irradiated plane and an emitting plane for illumination of the flap (22) such that light leaving the flap (22) passes also through the insertion slot (14).

2. A device according to claim 1, **characterised in that** the light source is a light-emitting diode (LED).

3. A device according to claim 1 or 2, **characterised in that** the flap has a transverse slot (38) extending parallel to the swivelling axis, the length of which is somewhat smaller than the width of a card (44), the transverse slot (38) being dimensioned such that an object (46) put into the insertion slot (14), which has a smaller extension in the width than the card (44), is clamped in in the transverse slot (38) at the initial swivelling of the flap (22).

4. A device according to any one of claims 1 to 3, **characterised in that** in a groove (40) parallel to the swivelling axis, a line-shaped sealing element (42) is accommodated, which comes into sliding engagement with the side of the card (44) facing it when the card (44) is introduced into the insertion slot (14).

5. A device according to claim 4, **characterised in that** a circulating groove (40) is provided for the accommodation of an annular sealing element (42).

6. A device according to any one of claims 1 to 5, **characterised in that** the flap (22) has at least one projecting portion (34, 36) on its backside, which prevents installation of the flap (22) into the correct position or swivelling of the flap (22) or which blocks insertion of a card, respectively, when the flap (22) is set in in a wrong orientation.

## Revendications

1. Dispositif de lecture de cartes qui comprend une unité de fente et une unité de lecture qui peuvent être reliées l'une à l'autre de manière détachable, l'unité de lecture comportant un module de commande électronique pour les fonctions de lecture de cartes et l'unité de fente comportant un volet de protection qui est logé de manière à pouvoir pivoter autour d'un axe et qui est précontraint en position de fermeture, **caractérisé en ce qu'**une plaquette imprimée (50), qui peut être reliée au module de commande par l'intermédiaire d'une fiche de raccordement et sur laquelle est placée au moins une source lumineuse (52), est disposée dans l'unité de fente (10), le volet de protection (22) est fait en une matière transparente et comporte au moins un segment (30) prismatique orienté vers la source lumineuse (52) avec une surface d'incidence et une surface de rayonnement pour l'éclairage du volet (22) de telle manière que la lumière sortant du volet (22) passe également à travers la fente d'insertion (14).

2. Dispositif selon la revendication 1, **caractérisé en ce que** la source lumineuse est une diode électroluminescente (DEL).

3. Dispositif selon la revendication 1 ou 2, **caractérisé en ce que** le volet comporte une fente transversale (38) s'étendant parallèlement à l'axe de pivotement dont la longueur est un peu inférieure à la largeur d'une carte (44), la fente transversale (38) étant conçue de telle manière qu'un objet (46) inséré dans la fente d'insertion (14), qui présente une extension en largeur inférieure à la carte (44), est coincé dans la fente transversale (38) au début du pivotement du volet (22).

4. Dispositif selon l'une des revendications 1 à 3, **caractérisé en ce qu'**un élément d'étanchéité linéaire (42), qui vient en prise par glissement avec la face de la carte (44) tournée vers lui lorsque la carte (44) est introduite dans la fente d'insertion (14), est logé parallèlement à l'axe de pivotement dans une rainure (40).

5. Dispositif selon la revendication 4, **caractérisé en ce qu'**il est prévu une rainure circulaire (40) pour le logement d'un élément d'étanchéité annulaire (42).

6. Dispositif selon l'une des revendications 1 à 5, **caractérisé en ce que** le volet (22) comporte sur sa face arrière au moins un segment en saillie (34, 36) qui empêche la pose du volet (22) dans la position correcte ou un pivotement du volet (22) ou qui bloque l'insertion d'une carte lorsque le volet (22) est utilisé suivant une mauvaise orientation.
